# EUROPEAN PATENT SPECIFICATION

(11) **EP 1 328 562 B1**
(45) Date of publication and mention of the grant of the patent: **11.01.2006**
(21) Application number: 01986307.5
(22) Date of filing: 20.09.2001
(51) Int. Cl.: C08F 214/26, C08F 2/18, C08F 216/14

(54) **FLUOROPOLYMER**
FLUORPOLYMER
FLUOROPOLYMERE

(30) Priority: 29.09.2000 DE 10048730
(43) Date of publication of application: 23.07.2003
(73) Proprietor: 3M Innovative Properties Company, St. Paul, MN 55133-3427 (US)
(72) Inventor: KAULBACH, Ralph, 84547 Emmerting (DE); HINTZER, Klaus, 84556 Kastl (DE); KLOOS, Friedrich, 84556 Kastl (DE); SCHWERTFEGER, Werner, 84503 Altoetting, Bavaria (DE)
(74) Representative: Voortmans, Gilbert J.L.
(86) International application number: PCT/US2001/029302
(87) International publication number: WO 2002/028926

(56) References cited:
- EP-A- 0 075 312
- EP-A- 0 257 644
- EP-A- 0 296 559
- EP-A- 0 583 481
- WO-A-01/49752
- WO-A-01/49759
- DE-A- 3 823 278

## Description

The present invention relates to fluoropolymers which have a melting point of at least 160°C and which are prepared from tetrafluoroethylene (TFE), from perfluoro vinyl ethers, and also, where appropriate, from conventional olefinic comonomers, such as hexafluoropropylene (HFP), or olefins which contain hydrogen or contain chlorine.

These fluoropolymers are either thermoplastic or are not processable in the melt despite their possession of a melting point.

Typical representatives of thermoplastically processable TFE copolymers are copolymers made from TFE and from perfluoro (alkyl vinyl) ethers (PAVE) having from 1 to 3 carbon atoms in the alkyl radical, in particular perfluoro (n-propyl vinyl) ether (PPVE-1) (US-A-3 132 123). Such copolymers are commercially available under the designation "PFA". Starting from a comonomer content of about 2% by weight PAVE, these partially crystalline copolymers have outstanding technical performance, for example extraordinary chemical stability combined with high service temperatures. The previously known and used PFA products are copolymers made from TFE and from PPVE-1 (US-A-3 635 926) as well as terpolymers made from TFE/PPVE-1 and HFP (DE-A-26 39 109). Copolymer products which contain perfluoro ethyl vinyl ether (WO-A-97/07147) or perfluoro methyl vinyl ether (US-A-4 864 006) in place of PPVE-1 are also to be found in the literature. However, these copolymers have low flexural fatigue strength and low flexibility, and therefore have little suitability for corrugated tubing applications.

Another commonly used and thermoplastically processable material is fluorinated ethylenepropylene copolymer (FEP) (US-A-2 946 763, US-A-2 955 099, US-A-3 085 083). These copolymers are not highly resistant with regard to thermal or chemical stress cracking, or to flexural fatigue properties. These properties are improved by incorporating PPVE-1 (DE-A-27 10 501) into the FEP. However, a relatively large amount of PPVE-1 is needed in order to achieve a rational property profile, and this is very costly (EP-A-75 312). The amount can be reduced by using relatively long-chain vinyl ethers, in particular by incorporating perfluoro 2-propoxypropyl vinyl ether (PPVE-2). PPVE-2 is only cost-effectively usable in non-aqueous polymerization (EP-A-75 312). Otherwise the polymerization times are too long to be cost-effective.

Fluorinated thermoplastics tend to degrade thermally when processed. The thermal degradation takes place predominantly via the thermally unstable end groups formed during the polymerization, i.e. from the end of the chain. The mechanism of this degradation has been described in some detail in "Modern Fluoropolymers", John Wiley & Sons, 1997, and in K. Hintzer and G. Löhr, 'Melt Processable Tetrafluorethylene-Perfluoropropylvinyl ether copolymers (PFA)', page 223. During the thermal degradation corrosive gases are produced and considerably impair the quality of the final product via metal contamination or bubble formation, and can corrode tooling and processing machinery. The effect naturally increases as molecular weight falls (a lower melt viscosity). The degradation can be substantially suppressed by converting the thermally unstable end groups into stable CF₃ end groups by postfluorination of agglomerate or pelletized melt, for example as described in US-A-4 743 658 and DE-A-19 01 872. To achieve particularly pure products, a stationary bed of agglomerate may be fluorinated as in US Patent Application 60/208,626 dated June 1, 2000. For fast extrusion, in accordance with WO-A-99/41313 preference is given to bi- or multimodal molecular weight distributions.

Polytetrafluoroethylene (PTFE) was the first commercially available perfluorinated fluoropolymer, and its property profiles have been continually improved in recent decades. However, its very high molecular weight makes it processable only by sinter techniques or other specialized processing methods, such as paste extrusion. The polymer chains have a linear structure, and this can be highly disadvantageous in applications, since the polymer chains slide over one another when a force is applied. This causes outflow of the PTFE material, a phenomenon known as "cold flow" which is problematic in gasket applications. This problem has been reduced, but not solved, by what is known as modification, i.e. incorporation of comonomers, such as PPVE-1, in amounts of from 0.01 to 0.1% by weight (US-A-3 855 191). There still remains a need, therefore, to suppress "cold flow" and also to increase weldability.

US-A-3 817 960 discloses low and high molecular weight copolymers of TFE and a perfluorovinyl ether of the formula CF₃(CF₂O)ₙCF₂CF₂OCF=CF₂. The low molecular weight copolymers are taught useful as thermally stable oils and greases and the high molecular weight can be used for making molded articles.

US-A-4 920 170 and US-A-5 401 818 disclose elastomeric polymers that include certain units derived from fluorovinyl ethers. Typical applications taught for these polymers include molded articles such as gaskets, O-rings, flange seals etc..

It is an object of the present invention to provide a thermoplastically melt processable material which has high flexural fatigue strength, high flexibility and low susceptibility to stress cracking, and secondly to reduce further the "cold flow" ofTFE polymer which can be processed through sintering. The polymerization should preferably be carried out in an aqueous medium.

To solve all of these problems, units derived from one or more perfluorovinyl ether comonomers as defined below are incorporated in the fluoropolymer. The perfluorovinyl ether comonomer has a relatively long and relatively mobile, linear side chain, and can conveniently be incorporated into the polymer in an aqueous emulsion polymerization.

In particular, the present invention relates to fluoropolymers that have a melting point of at least 160°C and that comprise from 60 to 99.99% by weight of units derived from tetrafluoroethylene, from 0 to 30% by weight of units derived from hexafluoropropylene, from 0 to 10% by weight of units derived from other olefinic fluorinated or non-fluorinated monomers, from 0 to 35% by weight of units derived from perfluoro alkyl vinyl ether having from 1 to 5 carbon atoms in the alkyl radical, and from 0.01 to 35% by weight of units derived from one or more perfluoro vinyl ethers of the formula:

CF₂=CF[O(CF₂)ₙ]ₘ(OCF₂)ₓOR_{f} [I]

where
- n: is an integer from 2 to 6,
- m: is an integer from 1 to 3,
- x: is an integer from 0 to 4, and
- R_{f}: is a perfluoroalkyl group having from 1 to 6 carbon atoms.

In a particular embodiment of the invention, the fluoropolymer has between 65% by weight and 99.99% by weight of units derived from tetrafluoroethylene. In a further embodiment, the fluoropolymer has between 70% by weight and 99.99% by weight of units derived from tetrafluoroethylene and between 0.01 % by weight and 30% by weight of units derived from perfluorovinyl ethers of formula [I]. Typically, the amount of units of perfluorovinyl ethers of formula [1] will be between 0.1% by weight and 15% by weight, preferably between 0.3% by weight and 10% by weight. It will be understood that if the fluoropolymer is a copolymer of only TFE and the perfluorovinyl ether(s) of formula [I], the remaining units will be TFE. If the fluoropolymer is a copolymer of TFE, the perfluorovinyl ether(s) of formula [I] and further comonomers other than the perfluorovinyl ether(s) of formula [I], the amounts of TFE and the further comonomers should be as set forth above.

In one embodiment of the invention, the fluoropolymer is thermoplastically melt processable and can thus readily be used to make extruded articles. By the term "thermoplastically melt processable" is meant that the fluoropolymer has a sufficiently low melt viscosity such that the melt of the fluoropolymer can be processed by typically available extrusion equipment. Generally, the melt flow index at 372°C measured as set forth in the examples, should be more than 0, preferably at least 0.1 so as to achieve a thermoplastically melt processable fluoropolymer.

Thus, in a particular aspect, the invention also relates to a method of making an extruded article with the aforementioned fluoropolymers and to extruded articles such as films, tubes, hoses and cables having the fluoropolymer as an insulating medium.

According to the invention it has been found that the use of even small amounts of units derived from the comonomer of formula (I), whose side chain is linear, long and flexible markedly improves flexural fatigue strength, flexibility, and chemical and thermal stress cracking performance. Like PPVE-1, but unlike the branched material PPVE-2, perfluoro 3-methoxy-n-propyl vinyl ether (PMPVE) which has the following formula

F₂C=CF-O-CF₂-CF₂-CF₂-O-CF₃

or perfluoro 2-methoxyethyl vinyl ether (PMEVE) which has the formula

F₂C=CF-O-CF₂-CF₂-O-CF₃

in particular can be copolymerized with TFE in aqueous emulsion polymerization. In comparison with PPVE-1, the side chain in PMPVE and PMEVE is longer, and in comparison with PPVE-2 the side chain in PMPVE and PMEVE is more mobile. Used as "modifiers" in PTFE, PMPVE and PMEVE cause a substantially greater reduction in the "cold flow" of such products, and to an improvement in their weldability. The unbranched side chain is significant. Other preferred comonomers with a long mobile, linear side chain are:

F₂C=CF-O-CF₂-CF₂-O-CF₂-CF₃,

F₂C=CF-O-CF₂-CF₂-CF₂-O-CF₂-CF₃,

which can be prepared as in US Patent Application
Serial No. 09/470,497, filed on December 22, 1999,

F₂C=CF-O-CF₂-CF₂-O-CF₂-O-CF₃,

F₂C=CF-O-CF₂-CF₂-(O-CF₂)₂-O-CF₃,

F₂C=CF-O-CF₂-CF₂-(O-CF₂)₃-O-CF₃,

F₂C=CF-O-CF₂-CF₂-(O-CF₂)₄-O-CF₃,

which can be prepared as in DE-A-22 15 401 or US-A-3 692 843.

The long mobile, linear side chains improve the property profile of fluorinated thermoplastics, and also of PTFE products modified with the comonomer of formula [I].

Compared with a conventional PFA product with the same melting point, a copolymer of the invention is more flexible, i.e. has lower stiffness, and the product has a smaller spherolite structure. This can be seen from the markedly lower modulus of elasticity (119 MPa) of a copolymer of TFE and PMPVE, compared with a conventional PFA with a modulus of elasticity of 137 MPa at 120°C. Flexural fatigue strength tests revealed a marked improvement in this property in the fluoropolymer in comparison with a PFA. Indeed, a PMPVE containing polymer has a flexural fatigue strength 20% higher than that of a known PFA product. There is a reduction by a factor of ~ 10 in spherolite structure for the same melting point. Its average value is 3 µm. This directly affects the surface structure of hose, specifically giving a very low surface roughness on the internal wall. This has hitherto been possible only by way of an additional nucleation (US-A-5 473 018) or as in the German Patent Application 199 64 006.8 of December 30, 1999, which is not a prior publication, by way of the additional incorporation of PPVE-2 into the PFA. Surface roughness is an increasingly important factor in the supply of ultrahigh-purity media, since lower roughness reduces cleaning cost, in particular reducing conditioning times, and produces less microbacterial growth.

A FEP copolymer modified with a perfluorovinyl ether monomer of formula [I], for example an FEP polymer modified with PMPVE is more resistant than an unmodified FEP or a PPVE-1-modified FEP grade to media which cause stress cracking. This difference can be illustrated using the elongation at 200°C. An FEP product modified with PMPVE has 600% higher elongation at 200°C than a comparable FEP copolymer. This is of particular interest for the use of FEP materials as electrical insulation in what are known as "Local Area Networks" (LAN). Here, besides non-combustibility and good dielectric properties, the insulation is also required to have resistance to high temperatures. It is possible to achieve markedly better values for the mechanical data at high temperatures with a relatively small content of "modifier". Indeed, 0.1 mol% of PMPVE in the FEP gives an elongation at break at 200°C which is higher than with 0.25 mol% of PPVE-1 in the FEP.

Accordingly, in a particular embodiment, the present invention provides a copolymer having a melting point of at least 240°C, having from 80 to 99.99% by weight of units derived from tetrafluoroethylene, from 1% to 15% by weight, of units derived from hexafluoropropylene, from 0 to 10% by weight of units derived from other olefinic fluorinated or non-fluorinated monomers, from 0 to 18.99% by weight of units derived from perfluoro alkyl vinyl ether having from 1 to 5 carbon atoms in the alkyl radical, and from 0.01 to 19% by weight of units derived from one or more perfluoro vinyl ethers of the formula:

CF₂=CF[O(CF₂)ₙ]ₘ(OCF₂)ₓOR_{f} [I]

where
- n: is an integer from 2 to 6,
- m: is an integer from 1 to 3,
- x: is an integer from 0 to 4, and
- R_{f}: is a perfluoroalkyl group having from 1 to 6 carbon atoms.

A terpolymer composed of TFE, HFP and a perfluorovinyl ether of formula [1], e.g. PMPVE, and having a melting point of 285°C or more has better flexural fatigue strengths than a corresponding terpolymer made from TFE/HFP and PPVE-1. Indeed, incorporating the same weight of ether comonomer units of formula [1] gives a terpolymer product whose flexural fatigue strength is 35% higher using PMPVE than can be achieved using PPVE-1. The effect of the long and mobile side chain of PMPVE is clearly seen in the lower modulus of elasticity, only 114 MPa at 120°C, compared with 123 MPa for a terpolymer comprising PPVE-1. This novel material is easy to process and gives a very smooth inner surface when producing hose. In addition, this material has high transparency.

At increased proportions of comonomers HFP and comonomers according to formula [1], e.g. PMPVE, products can be prepared which have melting points of from 160 to 220°C and have excellent suitability as processing aids for blown film production, or as a coating material or insulating material in gasoline hose. These materials have high chemicals resistance, low permeability and good flexibility, together with favorable processing conditions. These properties are preferably achieved using a perfluorinated polymer chain and a high proportion of "modifier".

To improve chemical and physical binding to hydrogen-containing polymers, it is preferable to include up to 10% by weight of a hydrogen-containing comonomer such as for example ethylene, propylene or vinylidene fluoride. This binding is of interest in producing gasoline hose, and there is only an insignificant increase here in the permeability of the fluoropolymer. The low-melting products produced according to the invention have markedly better mechanical properties than the known low-melting FEP grades (EP-A-656 912 and EP-A-731 814).

To give the fluoropolymer better resistance to thermal degradation, and also to improve their performance and processing properties for certain relevant applications, the thermally unstable end groups produced by the polymerization may be converted into thermally stable -CF₃ end groups by reaction with fluorine. In a particular embodiment, the amount of end groups other than CF₃ is less than 70 per 10⁶ carbon atoms.

Modification of PTFE with PMPVE rather than PPVE-1 or HFP increases long-term flexural strength and gives a smoother surface. The significantly lower deformation under load ("cold flow") should be emphasized.

Deformation under load plays a decisive part in the use of PTFE as a gasket material, its use being preferred because of its chemicals resistance and heat resistance. If the deformation is excessive, the PTFE material can be expelled, and this in turn causes leaks. A PTFE material with low "cold flow" ensures markedly greater reliability and serviceability in these applications.

In tensile creep tests at room temperature with tensile stresses of 3 MPa, 5 MPa and 7 MPa, this PMPVE-modified PTFE material has an elongation after 100 h of only 50% of that of PPVE-I-modified PTFE grades, and only 25% of that of unmodified PTFE grades. The "cold flow" is therefore drastically reduced in the modified PTFE material, and this is advantageous in gasket applications. In addition, a PMPVE-modified PTFE material can be welded and thermoformed, and is therefore particularly well suited to inner linings in pipes or in containers.

The PTFE modified material for use in a gasket application or for use as inner lining in pipes or containers is typically a copolymer of TFE and one or more comonomers of formula [1] above wherein the amount of TFE is between 98.5% by weight and 99.99% by weight and whereby the amount of the comonomers according to formula [I] is between 0.01% by weight and 1.5% by weight. Such a PTFE modified material will typically have a melting point of at least 315°C and may not be melt processable but will be processable through sinter techniques or paste extrusion.

The copolymers according to the invention can conveniently prepared through aqueous emulsion polymerization of appropriate amounts of the composing monomers or through suspension. The obtained polymer dispersion after aqueous emulsion polymerization can be used as such or if higher solids are desired, can be upconcentrated. Alternatively, the dispersion may be agglomerated to produce the polymer in agglomerate form. Agglomerates will typically have an average size of 1 to 5mm. If the agglomerates obtained from agglomerating the dispersion are too small, it may be desirable to compact the agglomerate to produce a compacted agglomerate which will typically have an average size of 1 to 10mm. Still further, if the polymer is melt processible, the polymer may be melted, extruded and cut into granulates of a desired size. The latter may be called melt granulate.

### Test methods:

The content of perfluorinated comonomers (US-A-4 029 868, US-A-4 552 925) and the number of end groups (EP-A-226 668, US-A-3 085 083) are determined by IR spectroscopy, using a Nicolet Magna 560 FTIR. The total of the end groups is calculated from the isolated and bonded COOH, CONH₂ and COF groups. PMPVE is likewise determined via the IR spectrum. For this, the quotient calculated from the signals at wavelengths 998/2365 cm⁻¹ is converted using the factor 2.6 to obtain the proportion of PMPVE by weight.

The melt index (melt flow index, MFI) gives the amount of a melt in grams per 10 min which is extruded from a feed cylinder through a die under a piston loaded with weights. The dimensions of die, piston, feed cylinder and weights have been standardized (DIN 53735, ASTM D-1238). All of the MFIs mentioned here were determined using a 2.1 mm die with a length of 8 mm, for an applied weight of 5 kg and a temperature of 372°C.

Flexural fatigue strength tests are carried out on films of 1.0 mm thickness. The device used here is model 956, No. 102 from Frank, year of construction 1967. The film strips required to determine flexural fatigue strength are 15 mm wide and have a minimum length of 100 mm. For the test, adhesive strips are used to hold a piece of film of approximately DIN A5 size onto the drum of a film cutter, a draw-knife system is put in place and the cutting drum is rotated to manufacture strips at the given knife separation. The film strips are clamped into the screw clamps of the flexural fatigue machine, and loaded with an attached weight of 1529.6 g. The freely suspended film strips are flexed in both directions to an angle of 90° at the clamping system, with a flexing frequency of 250 double-flexures per minute, until fracture occurs. The number of double-flexures here is recorded by a counter located above the tester. The figure given is the number of double-flexures before the film fractures. The flexural fatigue strength of a material is calculated as the average value of the number of double-flexures from the three measurement locations available on each occasion.

The spherolites were measured on pressure-sintered plaques of 2 mm thickness, produced within a period of 30 min at 360°C. To this end, microtome sections were prepared from these pressure-sintered plaques and studied by optical microscopy.

The tensile creep test to DIN 53444 serves to determine deformation and strength performance. The test specimens used have a thickness of I mm and are as described for test specimen No. 5 in DIN 53455, but their width is only 12.55 mm (UL fire test specimen) rather than 15 mm as in the standard. The free clamped length was 100 mm. The tests were carried out at room temperature (23°C) on a Zwick 1445 universal testing machine, using a prescribed stress. The elongation in percent was measured after 100 h.

The complex modulus of elasticity was determined on test specimens stamped out from pressure-sintered plaques and having a thickness of 1 mm, a length of 30 mm and a width of 6 mm. A dynamic-mechanical-thermal spectrometer from Gabo was used for the tests, in the temperature range from -100 to 250°C.

The tensile test for determining elongation at break at 200°C was carried out on a Zwick universal testing machine. The test was carried out to DIN 53455 on dumbbell specimens to ASTM D 1708, stamped out from pressure-sintered plaques.

The examples below describe the invention in greater detail. Percentages and ratios given are based on weight unless otherwise stated.

### Example 1

25 1 of deionized water are charged to a polymerization reactor with a total volume of 40 1, provided with an impeller stirrer. The reactor is sealed, and the atmospheric oxygen removed by cycles of evacuation and nitrogen-flushing, and the vessel is heated to 63°C. After evacuation, 122 g of ammonium perfluorooctanoate in the form of a 30% strength solution are added to the vessel. 180 g of PMPVE are then pumped in. TFE is then set, with stirring, until the total pressure has reached 13.0 bar. 19 g of methylene chloride are then added into the vessel. The polymerization is initiated by pumping in 2 g of ammonium peroxodisulfate (APS), dissolved in 100 ml of deionized water. As soon as the pressure starts to fall, TFE and PMPVE are supplemented by introducing the gases in a feed ratio PMPVE/TFE of 0.04, so that the total pressure of 13.0 bar is maintained. The heat generated is dissipated by cooling the vessel wall, keeping the temperature constant at 63°C. After a total of 7.2 kg of TFE has been fed into the reactor, the monomer feed is interrupted, the pressure in the reactor is released, and it is flushed several times with N₂. This gives a copolymer which has a PMPVE content of 3.6%, a melting point of 312°C and an MFI of 1.8.

4 kg of product are charged to a 5 I stainless steel reactor, and nitrogen at 130°C is used to heat the reactor and to flush the same until no air is present. A mixture of 20% of fluorine and 80% of nitrogen is then passed into the reactor for 5 x 30 min. After the fluorination, the reactor is nitrogen-flushed until a fluorine sensor (0.01 ppm) no longer indicates fluorine. The resultant fluorinated product still has 5 thermally unstable end groups.

| | MFI (372/5) | Cycles | Modulus of elasticity at 120°C (MPa) | Spherolite diameter in µm |
|---|---|---|---|---|
| Example 1 | 1.8 | 21780 | 119 | 3 |

### Comparative Example I

The polymerization is carried out as described in example 1, except that on this occasion PPVE-1 is utilized instead of PMPVE, with a PPVE-1/TFE feed ratio of 0.042. This gives a copolymer which has a PPVE-1 content of 4.0%, a melting point of 308°C and an MFI of 1.9. The resultant product is also subjected to fluorination as described in example 1 in such a way that 4 thermally unstable end groups are still present after the fluorination.

| | MFI (372/5) | Cycles | Modulus of elasticity at 120°C (MPa) | Spherolite diameter in µm |
|---|---|---|---|---|
| Comparative example 1 | 1.9 | 16641 | 137 | 24 |

Compared with a PFA product from comparative example 1, a copolymer product from example 1, prepared using PMPVE, has higher flexural fatigue strength, lower modulus of elasticity and small spherolites. It is therefore possible to prepare a flexible, thermoplastic, perfluorinated copolymer which is superior to conventional PFA products in terms of flexibility.

### Example 2

25 l of deionized water are charged to a polymerization reactor with a total volume of 40 l, provided with an impeller stirrer. The reactor is sealed, and the atmospheric oxygen removed by cycles of evacuation and nitrogen-flushing, and the vessel is heated to 70°C. After evacuation, 240 g of ammonium perfluorooctanoate in the form of a 30% strength solution are added to the vessel. 90 g of PMPVE are then pumped in. 0.13 bar of ethane is then added into the vessel, with stirring. TFE is then immediately fed until the pressure reaches 9 bar, and HFP is then applied under pressure until the total pressure of 17.0 bar has been reached. The polymerization is initiated by pumping in 8 g of APS, dissolved in 100 ml of deionized water. As soon as the pressure starts to fall, TFE, PMPVE and HFP are supplemented by introducing the gases in a feed ratio PMPVE/TFE of 0.02 and an HFP/TFE feed ratio of 0.05, so that the total pressure of 17.0 bar is maintained. The heat generated is dissipated by cooling the vessel wall, keeping the temperature constant at 70°C. After a total of 10 kg of TFE has been fed into the reactor, the monomer feed is interrupted, the pressure in the reactor is released, and it is flushed several times with N₂. The resultant terpolymer has an HFP content of 5.2%, a PMPVE content of 1.8%, a melting point of 287°C and an MFI (372/5) of 10.1.

| | MFI (372/5) | Cycles | Modulus of elasticity at 120°C (MPa) |
|---|---|---|---|
| Example 2 | 10.1 | 2980 | 114 |

### Comparative Example 2

The polymerization is carried out as described in example 2, except that on this occasion PPVE-1 is utilized instead of PMPVE, with a PPVE-1/TFE feed ratio of 0.02. This gives 7.0 kg of a copolymer which has a PPVE-1 content of 2.0%, an HFP content of 5.0%, a melting point of 286°C and an MFI of 8.0.

| | MFI (372/5) | Cycles | Modulus of elasticity at 120°C (MPa) |
|---|---|---|---|
| Comparative Example 2 | 8.0 | 2150 | 123 |

When compared with a terpolymer from comparative example 2, prepared using PPVE-1, a terpolymer from example 2, prepared using PMPVE, gives a more flexible product with higher flexural fatigue strength and lower modulus of elasticity.

### Example 3

25 1 of deionized water are charged to a polymerization reactor with a total volume of 40 I, provided with an impeller stirrer. The reactor is sealed, and the atmospheric oxygen removed by cycles of evacuation and nitrogen-flushing, and the vessel is heated to 70°C. After evacuation, 240 g of ammonium perfluorooctanoate in the form of a 30% strength solution are added to the vessel. TFE is then fed until the pressure reaches 6.5 bar, followed by application of HFP under pressure until the total pressure of 17.0 bar has been reached. The polymerization is initiated by pumping in 65 g of APS, dissolved in 100 ml of deionized water. As soon as the pressure starts to fall, TFE, PMPVE and HFP are supplemented by introducing the gases in a feed ratio PMPVE/TFE of 0.01 and an HFP/TFE feed ratio of 0.11, so that the total pressure of 17.0 bar is maintained. The heat generated is dissipated by cooling the vessel wall, keeping the temperature constant at 70°C. After a total of 10 kg of TFE has been fed into the reactor, the monomer feed is interrupted, the pressure in the reactor is released, and it is flushed several times with N₂. The resultant terpolymer has an HFP content of 13.1 %, an PMPVE content of 0.6%, a melting point of 260°C and an MFI (372/5) of 28.

### Comparative Example 3

The polymerization is carried out as described in example 3, but this time only using HFP, with an HFP/TFE feed ratio of 0.13. This gives a copolymer which has an HFP content of 14.5%, a melting point of 255°C and an MFI of 27.0.

### Comparative Example 4

The polymerization is carried out as described in example 3, except that this time PPVE-1 is utilized instead of PMPVE, with a PPVE-1/TFE feed ratio of 0.01. This gives a copolymer which has a PPVE-1 content of 1.0%, an HFP content of 13.0%, a melting point of 259°C and an MFI of 25.

The incorporation of PMPVE into an FEP product as in example 3 gives an improvement of about 600% in elongation at break at 200°C in comparison with an unmodified FEP product from comparative example 3. Marked advantages when using PMPVE are also seen in comparison with PPVE-1 modified FEP product from comparative example 4. Flexural fatigue strength has been increased by about 30% when PMPVE rather than PPVE-1 has been used as "modifier".

**Table 1: (Comparison of PMPVE- and PPVE-1-modified FEP products, and comparison with a standard FEP product)**

| | MFI (372/5) | Cycles | Elongation at break at 200°C(%) |
|---|---|---|---|
| Example 3 | 28 | 760 | 260% |
| Comparative Example 3 | 25 | 490 | 41% |
| Comparative Example 4 | 27 | 570 | 190% |

### Example 4

25 l of deionized water are charged to a polymerization reactor with a total volume of 40 l, provided with an impeller stirrer. The reactor is sealed, and the atmospheric oxygen removed by cycles of evacuation and nitrogen-flushing, and the vessel is heated to 70°C. After evacuation, 600 g of ammonium perfluorooctanoate in the form of a 30% strength solution are added to the vessel. 300 g of PMPVE, 12 bar of HFP and 5 bar of TFE are then fed, with stirring, so that the total pressure of 17.0 bar is achieved. The polymerization is initiated by pumping in 20 g of APS, dissolved in 100 ml of deionized water. As soon as the pressure starts to fall, TFE, PMPVE and HFP are supplemented by introducing the gases in a feed ratio PMPVE/TFE of 0.06 and an HFP/TFE feed ratio of 0.15, so that the total pressure of 17.0 bar is maintained. The heat generated is dissipated by cooling the vessel wall, keeping the temperature constant at 70°C. After a total of 10 kg of TFE has been fed into the reactor, the monomer feed is interrupted, the pressure in the reactor is released, and it is flushed several times with N₂. The resultant terpolymer has an HFP content of 17%, a PMPVE content of 6.5%, a melting point of 195°C and an MFI (372/5) of 100.

### Example 5

25 1 of deionized water are charged to a polymerization reactor with a total volume of 40 l, provided with an impeller stirrer. The reactor is sealed, and the atmospheric oxygen removed by cycles of evacuation and nitrogen-flushing, and the vessel is heated to 63°C. 20 g of PMPVE, 5 bar of nitrogen and 10 bar of TFE are then fed, so that the total pressure of 15.0 bar is achieved. The polymerization is initiated by pumping in 12 g of APS, dissolved in 100 ml of deionized water. As soon as the pressure starts to fall, TFE and PMPVE are supplemented by introducing the gases in a ratio PMPVE/TFE of 0.004, so that the total pressure of 15.0 bar is maintained. The heat generated is dissipated by cooling the vessel wall, keeping the temperature constant at 63°C. After a total of 10 kg of TFE has been fed into the reactor, the monomer feed is interrupted, the pressure in the reactor is released, and it is flushed several times with N₂. This gives a PTFE product which has a PMPVE content of 0.04%, a melting point of 341°C and an SSG of 2.165.

### Comparative Example 5

The polymerization is carried out as described in example 5, but on this occasion only TFE is utilized. This gives a PTFE product with a melting point of 343°C and an SSG of 2.16.

### Comparative Example 6

The polymerization is carried out as described in example 5, except that on this occasion PPVE-1 is utilized instead of PMPVE in the feed supply. This gives a PTFE product which has a PPVE-1 content of 0.04%, a melting point of 344°C and an SSG of 2.165.

Compared with a PPVE-1-modified PTFE product from comparative example 6, the elongations of the inventive product from example 5 are about 100% lower after 100 h at tensile stresses of 3 MPa, 5 MPa and 7 MPa. Compared with an unmodified PTFE product from comparative example 5, the elongation is indeed about 400% lower. The inventive products from example 5, PMPVE-modified PTFE products, therefore show markedly lower tendency to deform under load, to exhibit what is known as "cold flow", than previously known PTFE grades from comparative examples 5 and 6. This gives substantial performance advantages, particularly in uses in gasket materials.

**Table 2: (Comparison of elongation after 100 h in PMPVE- and PPVE-1-modified PTFE products, and comparison with an unmodified PTFE)**

| | % elongation 3 MPa/100 h | % elongation 5 MPa/100 h | % elongation 7 MPa/100 h | Comonomer in % |
|---|---|---|---|---|
| Example 5 | 0.41 | 1.29 | 3.66 | 0.04 |
| Comparative Example 5 | 1.32 | 4.04 | 14.55 | 0 |
| Comparative Example 6 | 0.87 | 2.28 | 6.36 | 0.04 |

## Claims

1. A polymer having a melting point of at least 160°C, having from 60 to 99.99% by weight of units derived from tetrafluoroethylene, from 0 to 30% by weight of units derived from hexafluoropropylene, from 0 to 10% by weight of units derived from other olefinic fluorinated or non-fluorinated monomers, from 0 to 35% by weight of units derived from perfluoro alkyl vinyl ether having from 1 to 5 carbon atoms in the alkyl radical, and from 0.01 to 35% by weight of units derived from one or more perfluoro vinyl ethers of the formula:
CF₂=CF[O(CF₂)ₙ]ₘ(OCF₂)ₓOR_{f}
where
n is an integer from 2 to 6,
m is an integer from 1 to 3,
x is an integer from 0 to 4, and
R_{f} is a perfluoroalkyl group having from 1 to 6 carbon atoms.

2. A polymer according to claim 1 wherein the amount of units derived from tetrafluoroethylene is between 65% by weight and 99.99% by weight.

3. A polymer according to claim 1 wherein the amount of units derived from tetrafluoroethylene is between 70% by weight and 99.99% by weight and the amount of units derived from said perfluorovinyl ethers is between 0.01% by weight and 30% by weight.

4. The polymer as claimed in claim 1, wherein the perfluoro vinyl ether has the formula CF₂=CF-O(-CF₂)₂-OCF₃ or CF₂=CF-O(-CF₂)₃-OCF₃.

5. The polymer as claimed in any of the previous claims, having less than 70 end groups other than -CF₃ per 10⁶ carbon atoms.

6. The polymer as claimed in any of the previous claims in the form of an agglomerate, melt granulate, compacted agglomerate or aqueous dispersion.

7. Method of making an extruded article comprising extruding a melted composition comprising a polymer having a melting point of at least 160°C, having from 60 to 99.99% by weight of units derived from tetrafluoroethylene, from 0 to 30% by weight of units derived from hexafluoropropylene, from 0 to 10% by weight of units derived from other olefinic fluorinated or non-fluorinated monomers, from 0 to 35% by weight of units derived from perfluoro alkyl vinyl ether having from 1 to 5 carbon atoms in the alkyl radical, and from 0.01 to 35% by weight of units derived from one or more perfluoro vinyl ethers of the formula:
CF₂=CF[O(CF₂)ₙ]ₘ(OCF₂)ₓOR_{f}
where
n is an integer from 2 to 6,
m is an integer from 1 to 3,
x is an integer from 0 to 4, and
R_{f} is a perfluoroalkyl group having from 1 to 6 carbon atoms.

8. Extruded article comprising a polymer having a melting point of at least 160°C, having from 60 to 99.99% by weight of units derived from tetrafluoroethylene, from 0 to 30% by weight of units derived from hexafluoropropylene, from 0 to 10% by weight of units derived from other olefinic fluorinated or non-fluorinated monomers, from 0 to 35% by weight of units derived from perfluoro alkyl vinyl ether having from 1 to 5 carbon atoms in the alkyl radical, and from 0.01 to 35% by weight of units derived from one or more perfluoro vinyl ethers of the formula:
CF₂=CF[O(CF₂)ₙ]ₘ(OCF₂)ₓOR_{f}
where
n is an integer from 2 to 6,
m is an integer from 1 to 3,
x is an integer from 0 to 4, and
R_{f} is a perfluoroalkyl group having from 1 to 6 carbon atoms.

9. Extruded article according to claim 7 wherein said article is selected from the group consisting of a film, a tube, a hose and a cable having said polymer as an insulating medium.

10. Use of a fluoropolymer having a melting point of at least 315°C, having from 98.5% to 99.99% by weight of units derived from tetrafluoroethylene and from 0.01 to 1.5% by weight of units derived from one or more perfluoro vinyl ethers of the formula:
CF₂=CF[O(CF₂)ₙ]ₘ(OCF₂)ₓOR_{f}
where
n is an integer from 2 to 6,
m is an integer from I to 3,
x is an integer from 0 to 4, and
R_{f} is a perfluoroalkyl group having from 1 to 6 carbon atoms;
for making gaskets or an inner lining of pipes or containers.

11. A method for producing a polymer as claimed in claim 1 wherein (i) tetrafluoroethylene, (ii) one or more perfluoro vinyl ethers of the formula:
CF₂=CF[O(CF₂)ₙ]ₘ(OCF₂)ₓOR_{f}
where
n is an integer from 2 to 6,
m is an integer from 1 to 3,
x is an integer from 0 to 4, and
R_{f} is a perfluoroalkyl group having from 1 to 6 carbon atoms.
and (iii) optionally one or more further olefinic fluorinated or non-fluorinated monomers and or a perfluoro alkyl vinyl ether having from 1 to 5 carbon atoms in the alkyl radical, are copolymerized through aqueous emulsion polymerization or suspension polymerization in the appropriate amounts so as to obtain a polymer as defined in claim 1.

## Patentansprüche

1. Polymer, mit einem Schmelzpunkt von mindestens 160°C, mit 60 bis 99,99 Gew.-% an Einheiten, die sich von Tetrafluorethylen ableiten, 0 bis 30 Gew.-% an Einheiten, die sich von Hexafluorpropylen ableiten, 0 bis 10 Gew.-% an Einheiten, die sich von sonstigen olefinischen fluorierten oder nicht fluorierten Monomeren ableiten, 0 bis 35 Gew.-% an Einheiten, die sich von Perfluoralkylvinylether mit 1 bis 5 C-Atomen im Alkylrest ableiten, und 0,01 bis 35 Gew.-% an Einheiten, die sich von einem oder mehreren Perfluorvinylethern der Formel
CF₂=CF[O(CF₂)ₙ]ₘ(OCF₂)ₓOR_{f}
ableiten, wobei
n eine ganze Zahl von 2 bis 6,
m eine ganze Zahl von 1 bis 3,
x eine ganze Zahl von 0 bis 4 darstellt und
R_{f} eine Perfluoralkylgruppe mit 1 bis 6 C-Atomen ist.

2. Polymer nach Anspruch 1, wobei die Menge an Einheiten, die sich von Tetrafluorethylen ableiten, zwischen 65 Gew.-% und 99,99 Gew.-% beträgt.

3. Polymer nach Anspruch 1, wobei die Menge an Einheiten, die sich von Tetrafluorethylen ableiten, zwischen 70 Gew.-% und 99,99 Gew.-% und die Menge an Einheiten, die sich von den genannten Perfluorvinylethern ableiten, zwischen 0,01 Gew.-% und 30 Gew.-% liegt.

4. Polymer nach Anspruch 1, wobei der Perfluorvinylether die Formel CF₂=CF-O(-CF₂)₂-OCF₃ oder CF₂=CF-O(-CF₂)₃-OCF₃ aufweist.

5. Polymer nach einem beliebigen der vorhergehenden Ansprüche mit weniger als 70 von -CF₃ verschiedenen Endgruppen pro 10⁶ C-Atome.

6. Polymer nach einem beliebigen der vorhergehenden Ansprüche in Form eines Agglomerats, Schmelzgranulats, kompaktierten Agglomerats oder einer wässrigen Dispersion.

7. Verfahren zur Herstellung eines extrudierten Gegenstandes, umfassend das Extrudieren einer geschmolzenen Zusammensetzung mit einem Polymer mit einem Schmelzpunkt von mindestens 160°C, mit 60 bis 99,99 Gew.-% an Einheiten, die sich von Tetrafluorethylen ableiten, 0 bis 30 Gew.-% an Einheiten, die sich von Hexafluorpropylen ableiten, 0 bis 10 Gew.-% an Einheiten, die sich von sonstigen olefinischen fluorierten oder nicht fluorierten Monomeren ableiten, 0 bis 35 Gew.-% an Einheiten, die sich von Perfluoralkylvinylether mit 1 bis 5 C-Atomen im Alkylrest ableiten, und 0,01 bis 35 Gew.-% an Einheiten, die sich von einem oder mehreren Perfluorvinylethern der Formel
CF₂=CF[O(CF₂)ₙ]ₘ(OCF₂)ₓOR_{f}
ableiten, wobei
n eine ganze Zahl von 2 bis 6,
m eine ganze Zahl von 1 bis 3,
x eine ganze Zahl von 0 bis 4 darstellt und
R_{f} eine Perfluoralkylgruppe mit 1 bis 6 C-Atomen ist.

8. Extrudierter Gegenstand umfassend ein Polymer mit einem Schmelzpunkt von mindestens 160°C, mit 60 bis 99,99 Gew.-% an Einheiten, die sich von Tetrafluorethylen ableiten, 0 bis 30 Gew.-% an Einheiten, die sich von Hexafluorpropylen ableiten, 0 bis 10 Gew.-% an Einheiten, die sich von sonstigen olefinischen fluorierten oder nicht fluorierten Monomeren ableiten, 0 bis 35 Gew.-% an Einheiten, die sich von Perfluoralkylvinylether mit 1 bis 5 C-Atomen im Alkylrest ableiten, und 0,01 bis 35 Gew.-% an Einheiten, die sich von einem oder mehreren Perfluorvinylethern der Formel
CF₂=CF[O(CF₂)ₙ]ₘ(OCF₂)ₓOR_{f}
ableiten, wobei
n eine ganze Zahl von 2 bis 6,
m eine ganze Zahl von 1 bis 3,
x eine ganze Zahl von 0 bis 4 darstellt und
R_{f} eine Perfluoralkylgruppe mit 1 bis 6 C-Atomen ist.

9. Extrudierter Gegenstand nach Anspruch 7, wobei der Gegenstand aus einer Folie, einem Rohr, einem Schlauch oder einem Kabel mit dem Polymer als Isolation ausgewählt ist.

10. Verwendung eines Fluorpolymers mit einem Schmelzpunkt von mindestens 315°C, mit 98,5 bis 99,99 Gew.-% an Einheiten, die sich von Tetrafluorethylen ableiten, und 0,01 bis 1,5 Gew.-% an Einheiten, die sich von einem oder mehreren Perfluorvinylethern der Formel
CF₂=CF[O(CF₂)ₙ]ₘ(OCF₂)ₓOR_{f}
ableiten, wobei
n eine ganze Zahl von 2 bis 6,
m eine ganze Zahl von 1 bis 3,
x eine ganze Zahl von 0 bis 4 darstellt und
R_{f} eine Perfluoralkylgruppe mit 1 bis 6 C-Atomen ist,
zur Herstellung von Dichtungen oder von Innenauskleidungen von Rohren oder Behältern.

11. Verfahren zur Herstellung eines Polymers nach Anspruch 1, wobei man (i) Tetrafluorethylen, (ii) einen oder mehrere Perfluorvinylether der Formel
CF₂=CF[O(CF₂)ₙ]ₘ(OCF₂)ₓOR_{f}
wobei
n eine ganze Zahl von 2 bis 6,
m eine ganze Zahl von 1 bis 3,
x eine ganze Zahl von 0 bis 4 darstellt und
R_{f} eine Perfluoralkylgruppe mit 1 bis 6 C-Atomen ist,
und (iii) gegebenenfalls ein oder mehrere sonstige olefinische fluorierte oder nicht fluorierte Monomere und/oder einen Perfluoralkylvinylether mit 1 bis 5 C-Atomen im Alkylrest durch wässrige Emulsions- oder Suspensionspolymerisation in den entsprechenden Mengen derart copolymerisiert, dass man ein Polymer wie in Anspruch 1 definiert erhält.

## Revendications

1. Polymère ayant un point de fusion d'au moins 160°C, ayant de 60 à 99,99% en poids d'unités dérivées du tétrafluoroéthylène, de 0 à 30% en poids d'unités dérivées de l'hexafluoropropylène, de 0 à 10% en poids d'unités dérivées d'autres monomères oléfiniques fluorés ou non fluorés, de 0 à 35% en poids d'unités dérivées de l'éther vinylique de perfluoroalkyle ayant de 1 à 5 atomes de carbone dans le radical alkyle, et de 0,01 à 35% en poids d'unités dérivées d'un ou de plusieurs éthers perfluorovinyliques de la formule :
CF₂=CF[O(CF₂)ₙ]ₘ(OCF₂)ₓOR_{f}
où
n est un entier allant de 2 à 6,
m est un entier allant de 1 à 3,
x est un entier allant de 0 à 4, et
Rf est un groupement perfluoroalkyle ayant de 1 à 6 atomes de carbone.

2. Polymère selon la revendication 1, dans lequel la quantité des unités dérivées du tétrafluoroéthylène est comprise entre 65% en poids et 99,99% en poids.

3. Polymère selon la revendication 1, dans lequel la quantité d'unités dérivées du tétrafluoroéthylène est comprise entre 70% en poids et 99,99% en poids et la quantité des unités dérivées desdits éthers perfluorovinyliques est comprise entre 0,01% en poids et 30% en poids.

4. Polymère selon la revendication 1, dans lequel l'éther perfluorovinylique a la formule
CF₂=CF-O(-CF₂)₂-OCF₃ ou CF₂=CF-O(-CF₂)₃-OCF₃.

5. Polymère selon l'une quelconque des revendications précédentes, ayant moins de 70 groupements terminaux autres que -CF₃ pour 10⁶ atomes de carbone.

6. Polymère selon l'une quelconque des revendications précédentes sous la forme d'un agglomérat, d'un granulat à l'état fondu, d'un agglomérat compacté ou d'une dispersion aqueuse.

7. Procédé de fabrication d'un article extrudé comprenant l'extrusion d'une composition fondue comprenant un polymère ayant un point de fusion d'au moins 160°C, ayant de 60 à 99,99% en poids d'unités dérivées du tétrafluoroéthylène, de 0 à 30% en poids d'unités dérivées de l'hexafluoropropylène, de 0 à 10% en poids d'unités dérivées d'autres monomères oléfiniques fluorés ou non fluorés, de 0 à 35% en poids d'unités dérivées de l'éther vinylique de perfluoroalkyle ayant de 1 à 5 atomes de carbone dans le radical alkyle, et de 0,01 à 35% en poids d'unités dérivées d'un ou de plusieurs éthers perfluorovinyliques de la formule :
CF₂=CF[O(CF₂)ₙ]ₘ(OCF₂)ₓOR_{f}
où
n est un entier allant de 2 à 6,
m est un entier allant de 1 à 3,
x est un entier allant de 0 à 4, et
R_{f} est un groupement perfluoroalkyle ayant de 1 à 6 atomes de carbone.

8. Article extrudé comprenant un polymère ayant un point de fusion d'au moins 160°C, ayant de 60 à 99,99% en poids d'unités dérivées du tétrafluoroéthylène, de 0 à 30% en poids d'unités dérivées de l'hexafluoropropylène, de 0 à 10% en poids d'unités dérivées d'autres monomères oléfiniques fluorés ou non fluorés, de 0 à 35% en poids d'unités dérivées de l'éther vinylique de perfluoroalkyle ayant de 1 à 5 atomes de carbone dans le radical alkyle, et de 0,01 à 35% en poids d'unités dérivées d'un ou de plusieurs éthers perfluorovinyliques de la formule:
CF₂=CF[O(CF₂)ₙ]ₘ(OCF₂)ₓOR_{f}
où
n est un entier allant de 2 à 6,
m est un entier allant de 1 à 3,
x est un entier allant de 0 à 4, et
R_{f} est un groupement perfluoroalkyle ayant de 1 à 6 atomes de carbone.

9. Article extrudé selon la revendication 7, dans lequel ledit article est sélectionné parmi le groupe constitué d'un film, d'un tube, d'un tuyau souple et d'un câble ayant ledit polymère en tant que milieu d'isolation.

10. Utilisation d'un fluoropolymère ayant un point de fusion d'au moins 315°C, ayant de 98,5% en poids à 99,99% en poids d'unités dérivées du tétrafluoroéthylène et de 0,01 à 1,5% en poids d'unités dérivées d'un ou de plusieurs éthers perfluorovinyliques de la formule:
CF₂=CF[O(CF₂)ₙ]ₘ(OCF₂)ₓOR_{f}
où
n est un entier allant de 2 à 6,
m est un entier allant de 1 à 3,
x est un entier allant de 0 à 4, et
R_{f} est un groupement perfluoroalkyle ayant de 1 à 6 atomes de carbone;
en vue de la fabrication de garnitures ou d'une garniture intérieure de conduits ou de récipients.

11. Procédé de production d'un polymère selon la revendication 1, dans lequel (i) le tétrafluoroéthylène, (ii) un ou plusieurs éthers perfluorovinyliques de la formule :
CF₂=CF[O(CF₂)ₙ]ₘ(OCF₂)ₓOR_{f}
où
n est un entier allant de 2 à 6,
m est un entier allant de 1 à 3,
x est un entier allant de 0 à 4, et
R_{f} est un groupement perfluoroalkyle ayant de 1 à 6 atomes de carbone.
et (iii), en option, un ou plusieurs onomères oléfiniques fluorés ou non fluorés supplémentaires et/ou un éther vinylique de perfluoroalkyle, ayant de 1 à 5 atomes de carbone dans le radical alkyle, sont copolymérisés par polymérisation en émulsion aqueuse ou par polymérisation en suspension, dans les quantités appropriées, de manière à obtenir un polymère tel que défini dans la revendication 1.
